# EUROPEAN PATENT APPLICATION

(11) **EP 4 773 248 A1**
(43) Date of publication of application: **08.07.2026**
(21) Application number: 24859974.8
(22) Date of filing: 30.08.2024
(51) Int. Cl.: H01M 4/62

(54) **BINDER FOR POSITIVE ELECTRODE**

(30) Priority: 30.08.2023 JP 2023140179
(71) Applicant: Zeon Corporation, Tokyo 100-8246 (JP)
(72) Inventor: TAKAHASHI, Naoki, Tokyo 100-8246 (JP); NAKAI, Akito, Tokyo 100-8246 (JP); KIUCHI, Takashi, Saku-shi, Nagano 385-0051 (JP)
(74) Representative: Maiwald GmbH
(86) International application number: PCT/JP2024/031275
(87) International publication number: WO 2025/047949

(57) **Abstract**

The present invention provides a binder for positive electrodes that has excellent viscosity characteristics (dispersibility) and stability of the conductive material dispersion when manufacturing electrodes for electrochemical elements, and can improve the peel strength of the electrodes manufactured, and the output characteristics, the cycle characteristics, and the effect of suppressing cracking of the electrode active material after cycle testing of the electrochemical element. The binder for positive electrodes according to the present invention is made by dissolving or dispersing in N-methylpyrrolidone (NMP) hydrogenated nitrile rubber, which contains a nitrile group-containing monomer unit, a conjugated diene monomer unit and/or an alkylene structural unit, has a weight average molecular weight (Mw) of 1,000 to 1,000,000 and an iodine value of 0.1 to 100 mg/100 mg, contains a phenol-based antiaging agent, and has a palladium (Pd) content of 50 ppm or less and a calcium (Ca) content of 1 to 2000 ppm.

## Description

### [Technical field]

The present invention relates to a positive electrode binder and its manufacturing method, and more specifically, to a positive electrode binder that has excellent viscosity characteristics (dispersibility) and stability of a conductive material dispersion, improves the peel strength of the manufactured positive electrode and the effect of suppressing active material cracking after cycle testing, and can improve the output characteristics and cycle characteristics of electrochemical elements; and its manufacturing method.

### [Background technology]

Electrochemical elements such as lithium-ion secondary batteries, lithium-ion capacitors, and electric double layer capacitors are small, lightweight, and has high energy density and a characteristic which can be repeatedly charged and discharged, so that such electrochemical elements are used in a wide range of applications. For this reason, in recent years, improvements to battery components such as electrodes have been considered to further improve the high performance of electrochemical elements.

Here, the electrodes used in electrochemical elements usually include a current collector and an electrode mixture layer formed on the current collector. This electrode mixture layer is formed, for example, by applying a slurry containing an electrode active material, a conductive material, and a binder to the current collector and drying the applied slurry.

Therefore, in recent years, attempts have been made to improve the binder used in forming the electrode mixture layer in order to achieve further improvements in the performance of electrochemical elements. For example, technical studies have been conducted on positive electrode binders that use a polymer containing a nitrile group-containing monomer unit as the binder.

For example, Patent document 1 (JP 2018-160421 A) discloses a binder composition that contains a polymer containing a conjugated diene monomer unit and/or an alkylene structural unit and a nitrile group-containing monomer unit, and an organic solvent, and has a solution turbidity of 1 to 80 at a solid concentration of 10 mass%, and has an excellent balance between peel strength and secondary battery output characteristics. Specifically, nitrile rubber latex obtained by emulsion polymerization of acrylonitrile and 1,3-butadiene is added to a 1 mass% aqueous calcium chloride solution to coagulate, washed with water, filtered, and then vacuum dried to obtain nitrile rubber, and the obtained nitrile rubber is subjected to metathesis with a ruthenium-based Grubbs catalyst and ethylene as a co-olefin, and then hydrogenated with a rhodium-based Wilkinson catalyst with an iodine value of 5 mg/100 mg as the end point, and then 0.2 parts of activated carbon with an average diameter of 15 µm is added and stirred for 30 minutes to obtain a hydrogenated polymer with a calcium ion concentration of 1000 ppm and an iodine value of 5 mg/100 mg. Then, N-methylpyrrolidone (NMP) is added, and water is evaporated under reduced pressure to obtain an NMP solution of the hydrogenated polymer with a solution turbidity of 20, and an electrode is produced using a binder composition consisting of 1.6 parts of polyvinylidene fluoride (solution viscosity of 5 kPa·s) and 0.4 parts of the hydrogenated polymer as a binder composition. However, the conductive material dispersion has poor stability, making it difficult to produce electrochemical element electrodes, and there has been a demand for further improvements in the electrode peel strength and in preventing cracking of the electrode active material after cycle testing.

Patent document 2 (JP 6911985 B) discloses an electrochemical element having excellent rate characteristics and high-temperature storage stability, which includes a polymer containing α,β-ethylenically unsaturated nitrile monomer units and specific alkylene structural units, and having a volume average particle diameter D of 50-800 nm when dynamic light scattering measurement is performed, and at least one peak detected in the range of 5 µm to 30 µm, and a conductive carbon material; specifically, acrylonitrile and 1,3-butadiene are copolymerized, dibutylhydroxytoluene (BHT) is added as an antiaging agent, and then a 25 mass% aqueous solution of calcium chloride is added in an amount of 3 parts per 100 parts of the polymer to coagulate it, and 50 times the amount of ion-exchanged water is passed through the polymer to wash it, and then a hydrogenation reaction is performed using a palladium catalyst, and the palladium catalyst is filtered off to obtain polymers with iodine values of 5 mg/100 mg and 55 mg/100 mg, which are dissolved in NMP and used as a positive electrode binder. However, it is desired that the positive electrode binder used here improves the dispersibility of the dispersion and the peel strength of the electrode, and further improves the output characteristics, cycle characteristics, and effect of suppressing cracking of the electrode active material after a cycle test of an electrochemical element.

Patent document 3 (WO 2022/163769 A) discloses a nonaqueous secondary battery with excellent electrolyte mobility, which includes a positive electrode, a negative electrode, an electrolyte, and a separator, and in which the positive electrode has a positive electrode mixture layer formed on a current collector, the positive electrode mixture layer including a positive electrode active material, a conductive material, and a polymer A including at least one of a nitrile group-containing monomer unit, a conjugated diene unit, and an alkylene structural unit. As a specific example of polymer A, dibutylhydroxytoluene (BHT) is added to an emulsion polymerization liquid obtained by emulsion polymerization of acrylonitrile and 1,3-butadiene, followed by addition of a 25 mass% aqueous solution of calcium chloride to coagulate, followed by hydrogenation using a palladium catalyst, followed by filtration to obtain a hydrogenated polymer with an iodine value of 20 mg/100 mg. However, a positive electrode binder containing such a hydrogenated polymer has poor dispersibility in a conductive material dispersion, and there are problems such as the output characteristics and cycle characteristics of the electrochemical device produced, and active material cracking after cycle testing.

Patent document 4 (WO 2007/049651 A) discloses a carboxyl group-containing nitrile rubber that gives a crosslinked product with small compression set and dynamic heat generation, has an iodine value of 120 or less, and has a total content of magnesium, calcium, and aluminum of 2000 ppm or less, and has an α,β-ethylenically unsaturated nitrile monomer unit content of 10 to 60% by weight, and has an excellent processability. A specific example of a carboxyl group-containing nitrile rubber is obtained as follows: A nitrile group-containing saturated copolymer rubber latex is obtained by emulsion polymerization of acrylonitrile, mono-n-butyl fumarate, and butadiene, followed by hydrogenation with a palladium catalyst, to which an aqueous magnesium sulfate solution is added, and after coagulation, the resulting rubber is filtered and washed three times, centrifuged to remove the aqueous magnesium sulfate solution contained in the rubber, and then vacuum dried at 60°C for 12 hours to obtain a nitrile rubber with a magnesium content of 1 to 2 ppm, a calcium content of 1 ppm, and an aluminum content of 1 ppm. However, further improvements are desired for the nitrile rubber obtained here in terms of the stability of the conductive material dispersion, and, when used in an electrochemical element, the electrode peel strength and active material layer cracking after cycle testing.

### [Prior art documents]

### [Patent documents]

[Patent document 1] JP 2018-160421 A
[Patent document 2] JP 6911985 B
[Patent document 3] WO 2022/163769 A
[Patent document 4] WO 2007/049651 A

### [Summary of the invention]

### [Problem to be solved by the invention]

The present invention has been made in consideration of the above-mentioned circumstances, and aims to provide a positive electrode binder that has excellent viscosity characteristics (dispersibility) and stability of a conductive material dispersion when manufacturing electrodes for electrochemical elements, and that can improve the peel strength of the manufactured electrodes, and the output characteristics, the cycle characteristics, and the effect of suppressing cracking of the electrode active material after cycle testing of the electrochemical elements; and a manufacturing method thereof.

### [Means for solving the problem]

As a result of intensive research in consideration of the above problem, the present inventors have found that a positive electrode binder, which is made by dissolving or dispersing in N-methylpyrrolidone (NMP) a hydrogenated nitrile rubber, which is composed of nitrile group-containing monomer units and conjugated diene monomer units and/or alkylene structural units, has a specific amount of iodine value and weight average molecular weight (Mw), contains a phenol-based antiaging agent, and has a specific range of palladium (Pd) content and calcium (Ca) content, when mixed with a conductive material in the manufacture of an electrochemical element, improves the viscosity characteristics and stability of the conductive material dispersion, the peel strength and cracking suppression of the active material after cycle testing of the manufactured electrode, and the output characteristics and cycle characteristics of the electrochemical element.

The inventors have also found that the above characteristics can be further improved by using hydrogenated nitrile rubber with a limited content of Pd, Rh, and Ru derived from the hydrogenation catalyst, and Mg and Na derived from other reaction secondary materials, as a binder for the positive electrode.

The inventors have also found that hydrogenated nitrile rubber that constitutes the binder for the positive electrode, which uses calcium chloride as a coagulant, has excellent electrode peel characteristics in electrochemical elements such as lithium ion secondary batteries, and can prevent deterioration of cycle characteristics and cracking of the active material layer after cycle testing.

The inventors have found that by using hydrogenated nitrile rubber obtained by emulsion polymerization of a nitrile group-containing monomer and a conjugated diene monomer, coagulating the resulting polymer with calcium chloride, and hydrogenating the polymer (nitrile rubber) as a binder for the positive electrode, it is possible to improve the viscosity characteristics (dispersibility) of the conductive material dispersion when it is prepared, and to suppress cracking of the electrode active material after cycle testing in the resulting electrode, and to significantly improve the cycle characteristics of the electrochemical element.

The inventors have found that by using hydrogenated nitrile rubber obtained by emulsion polymerization of a nitrile group-containing monomer and a conjugated diene monomer, and then coagulating the emulsion polymerization liquid to which a specific antiaging agent has been added with calcium chloride to obtain a polymer, and then hydrogenating the polymer, it is possible to significantly improve the viscosity characteristics and stability of the conductive material dispersion when it is prepared, and to suppress cracking of the electrode active material after cycle testing in the resulting electrode, and to significantly improve the output characteristics and cycle characteristics of the electrochemical element.

The inventors further discovered that a positive electrode binder excellent for manufacturing such electrochemical elements can be easily manufactured by mixing hydrogenated nitrile rubber having specific properties and metal content with NMP.

The inventors have completed the present invention based on these findings.

Thus, according to the present invention, there is provided a positive electrode binder obtained by dissolving or dispersing in N-methylpyrrolidone (NMP) a hydrogenated nitrile rubber that contains nitrile group-containing monomer units, conjugated diene monomer units and/or alkylene structural units, has a weight average molecular weight (Mw) of 1,000 to 1,000,000 and an iodine value in the range of 0.1 to 100 mg/100 mg, contains a phenol-based antiaging agent, and has a palladium (Pd) content of 50 ppm or less and a calcium (Ca) content in the range of 1 to 2000 ppm.

In the positive electrode binder of the present invention, it is preferable that the palladium (Pd) content in the hydrogenated nitrile rubber is 10 ppm or less.

In the positive electrode binder of the present invention, it is further preferable that the rhodium (Rh) and/or ruthenium (Ru) content in the hydrogenated nitrile rubber is in the range of 0.5 to 50 ppm.

In the positive electrode binder of the present invention, it is further preferable that the sodium (Na) content in the hydrogenated nitrile rubber is 300 ppm or less and the magnesium (Mg) content is 50 ppm or less.

In the positive electrode binder of the present invention, it is preferable that the hydrogenated nitrile rubber is obtained by emulsion polymerizing a nitrile group-containing monomer and a conjugated diene monomer, coagulating the resulting polymer with calcium chloride, and hydrogenating the polymer.

In the positive electrode binder of the present invention, the hydrogenated nitrile rubber is preferably obtained by emulsion polymerizing a nitrile group-containing monomer and a conjugated diene monomer, adding a phenol-based antiaging agent to the resulting polymer, coagulating the polymer with calcium chloride, and then hydrogenating the polymer.

In the positive electrode binder of the present invention, the ratio of other repeating units other than the nitrile group-containing monomer units, the conjugated diene monomer units and/or alkylene structural units in the hydrogenated nitrile rubber is preferably 0 mass% or more and 5 mass% or less.

In the positive electrode binder of the present invention, the content of the phenol-based antiaging agent is preferably in the range of 0.001 to 2 mass%.

In the positive electrode binder of the present invention, the solid concentration is preferably in the range of 0.1 to 40 mass%.

The present invention also provides a method for producing a positive electrode binder, which comprises dissolving or dispersing in N-methylpyrrolidone (NMP) a hydrogenated nitrile rubber that contains a nitrile group-containing monomer unit, a conjugated diene monomer unit and/or an alkylene structural unit, has a weight average molecular weight (Mw) of 1,000 to 1,000,000 and an iodine value in the range of 0.1 to 100 mg/100 mg, contains a phenol-based antiaging agent, and has a palladium (Pd) content of 50 ppm or less and a calcium (Ca) content in the range of 1 to 2000 ppm.

In the method for producing a positive electrode binder of the present invention, it is preferable that the hydrogenated nitrile rubber is obtained by dividing hydrogenated nitrile rubber bale.

### [Effects of the Invention]

According to the present invention, a binder for positive electrodes, which has excellent viscosity characteristics and stability of the conductive material dispersion, can improve the peel strength of the produced electrode and the cracking suppression of the electrode active material after cycle testing of an electrochemical element, and can improve cycle characteristics and output characteristics, and a method for producing the same are provided.

### [Embodiments for carrying out the invention]

Hereinafter, an embodiment of the present invention will be described in detail.

### [Hydrogenated nitrile rubber]

The hydrogenated nitrile rubber used is characterized by containing nitrile group-containing monomer units, conjugated diene monomer units and/or alkylene structural units, having a weight average molecular weight (Mw) of 1,000 to 1,000,000, having an iodine value in the range of 0.1 to 100 mg/100 mg, containing a phenol-based antiaging agent, and having a Pd content of 50 ppm or less and a Ca content in the range of 1 to 2000 ppm.

The properties and manufacturing method of the hydrogenated nitrile rubber used are described in detail below.

### <Monomer components>

The hydrogenated nitrile rubber used contains nitrile group-containing monomer units and conjugated diene monomer units and/or alkylene structural units. This hydrogenated nitrile rubber is a component that can function as a binder that holds the electrode active material and the like from the collector without detaching them in the electrode mixture layer formed in the electrochemical element. Furthermore, this hydrogenated nitrile rubber can also function as a dispersant that can disperse the conductive material in a conductive material dispersion that contains a conductive material.

Specifically, the hydrogenated nitrile rubber can be a hydrogenated polymer obtained by hydrogenating a polymer containing a conjugated diene monomer unit and a nitrile group-containing monomer unit. Here, when the hydrogenation of the polymer containing the conjugated diene monomer unit and the nitrile group-containing monomer unit is completely performed, it becomes a polymer containing an alkylene structural unit and a nitrile group-containing monomer unit, and when the hydrogenation is partially performed, it becomes a polymer containing a conjugated diene monomer unit, an alkylene structural unit, and a nitrile group-containing monomer unit.

### (Nitrile group-containing monomer unit)

As a nitrile group-containing monomer capable of forming a nitrile group-containing monomer unit, an α,β-ethylenically unsaturated nitrile monomer can be mentioned. Specifically, the α,β-ethylenically unsaturated nitrile monomer is not particularly limited as long as it is an α,β-ethylenically unsaturated compound having a nitrile group, but examples thereof include acrylonitrile; α-halogenoacrylonitrile such as α-chloroacrylonitrile and α-bromoacrylonitrile; α-alkylacrylonitrile such as methacrylonitrile and α-ethylacrylonitrile; and the like. Among these, acrylonitrile is preferred. The nitrile group-containing monomer may be used alone or in any combination of two or more kinds in any ratio.

The content ratio of the nitrile group-containing monomer unit in the hydrogenated nitrile rubber is preferably 10 mass% or more, more preferably 15 mass% or more, even more preferably 20 mass% or more, and preferably 50 mass% or less, more preferably 45 mass% or less, and even more preferably 40 mass% or less, based on the total repeating units in the hydrogenated nitrile rubber being 100 mass%. If the content ratio of the nitrile group-containing monomer unit is within the above-mentioned range, the dispersion stability of the conductive material dispersion can be increased, and the peel strength of the obtained electrode can be further improved.

### (Conjugated diene monomer unit)

Here, examples of conjugated diene monomers that can form conjugated diene monomer units include conjugated diene compounds having 4 or more carbon atoms, such as 1,3-butadiene, isoprene, 2,3-dimethyl-1,3-butadiene, 2-ethyl-1,3-butadiene, and 1,3-pentadiene. Among them, isoprene and 1,3-butadiene are preferred, and 1,3-butadiene is particularly preferred.

### (Alkylene structural unit)

Here, the alkylene structural unit is a repeating unit composed only of an alkylene structure represented by the general formula: -CₙH₂ₙ- [where n is an integer of 2 or more]. The alkylene structural unit may be linear or branched, but from the viewpoint of improving the rate characteristics of the electrochemical element while reducing the resistance of the electrode, it is preferable that the alkylene structural unit is linear, i.e., a linear alkylene structural unit. It is also preferable that the number of carbon atoms in the alkylene structural unit is 4 or more (i.e., n in the above general formula is an integer of 4 or more).

The alkylene structural unit may be linear or branched, but it is preferable that the alkylene structural unit is linear, i.e., a linear alkylene structural unit. It is also preferable that the number of carbon atoms in the alkylene structural unit is 4 or more (i.e., n in the above general formula is an integer of 4 or more).

The total content of the conjugated diene monomer units and the alkylene structural units in the hydrogenated nitrile rubber is preferably 50 mass% or more, more preferably 55 mass% or more, and particularly preferably 60 mass% or more, and preferably 90 mass% or less, more preferably 85 mass% or less, and particularly preferably 80 mass% or less, when the total repeating units in the hydrogenated nitrile rubber (the total of the structural units and the monomer units) is 100 mass%. If the total content ratio of the conjugated diene monomer unit and the alkylene structural unit in the polymer is within the above range, the dispersion stability of the conductive material dispersion and the cycle characteristics of the electrochemical element can be improved.

When the hydrogenated nitrile rubber has only either one of the content ratios of the alkylene structural units and the conjugated diene monomer units, it is preferable that the ratio satisfies the above range.

### (Other repeating units)

Other repeating units include, but are not limited to, aromatic vinyl monomer units, acidic group-containing monomer units, and (meth)acrylic acid ester monomer units. The hydrogenated nitrile rubber may contain one type of other repeating unit, or may contain two or more types of other repeating units.

The content ratio of other repeating units in the hydrogenated nitrile rubber is preferably 0 mass% or more and 30 mass% or less, more preferably 0 mass% or more and 20 mass% or less, even more preferably 0 mass% or more and 10 mass% or less, and particularly preferably 0 mass% or more and 5 mass% or less, with the total repeating units in the hydrogenated nitrile rubber being 100 mass%.

### <Antiaging agent>

The hydrogenated nitrile rubber used is characterized by containing a phenol-based antiaging agent.

There are no particular limitations on the phenol-based antiaging agent as long as it is one that is normally used, but the melting point of the phenol-based antiaging agent is normally 150°C or less, preferably 100°C or less, more preferably 90°C or less, and the molecular weight of the phenol-based antiaging agent is normally in the range of 100 to 1000, preferably 150 to 500, more preferably 200 to 300.

Among the phenol-based antiaging agents, hindered phenol-based antiaging agents are particularly suitable because they provide a high degree of stability to the conductive material dispersion. In the present invention, a hindered phenol-based antiaging agent refers to a phenol-based antiaging agent having bulky substituents on both sides of the phenol group, and the bulky substituents on both sides are an isobutyl group or a t-butyl group, preferably a t-butyl group.

Hindered phenol-based antiaging agents include, for example, 2,6-di-t-butylphenol, 2,6-di-t-butyl-4-methylphenol, 2,6-di-t-pentenyl-4-methylphenol, 2,2-methylenebis(4-methyl-6-t-butylphenol), 2,4-bis(octylthiomethyl)-6-methylphenol, 2,6-di-t-butyl-α-dimethylamino-p-cresol, butyl 3-(4-hydroxy-3,5-di-t-butylphenyl)propionate, hexyl 3-(4-hydroxy-3,5-di-t-butylphenyl)propionate, octyl 3-(4-hydroxy-3,5-di-t-butylphenyl)propionate, decyl 3-(4-hydroxy-3,5-di-t-butylphenyl)propionate, dodecyl 3-(4-hydroxy-3,5-di-t-butylphenyl)propionate, octadecyl 3-(4-hydroxy-3,5-di-t-butylphenyl)propionate, heptyl 3-(4-hydroxy-3,5-diisopropylphenyl)propionate, octyl 3-(4-hydroxy-3,5-diisopropylphenyl)propionate, dodecyl 3-(4-hydroxy-3,5-diisopropylphenyl)propionate, octadecyl 3-(4-hydroxy-3,5-diisopropylphenyl)propionate, 4,4'-methylenebis(2,6-dibutylphenol), 2,6-di-t-butyl-4-(4,6-bis(octylthio)-1,3,5-triazin-2-ylamino)phenol and the like are preferred, with 2,6-dit-butyl-4-methylphenol (dibutylhydroxytoluene=BHT), 2,2-methylenebis(4-methyl-6-t-butylphenol), and 2,4-bis(octylthiomethyl)-6-methylphenol being the most preferred, BHT being the most preferred.

Phenol-based antiaging agents other than the hindered phenol-based antiaging agents include, for example, styrenated phenols, butylated hydroxyanisole, mono-(or di-, or tri-)(α-methylbenzyl)phenol as styrenated phenols, 2,2'-methylene-bis(4-methyl-6-t-butylphenol), alkylated bisphenols, 2,4-bis[(octylthio)methyl]-6-methylphenol, 2,2'-thiobis-(4-methyl-6-t-butylphenol), 4,4'-thiobis-(6-t-butyl-o-cresol), and the like, with styrenated phenol and 2,4-bis[(octylthio)methyl]-6-methylphenol being preferred.

These phenol-based antiaging agents can be used alone or in combination of two or more. The content of the phenol-based antiaging agent in the hydrogenated nitrile rubber is not particularly limited, but is usually in the range of 0.001 to 2 mass%, preferably 0.01 to 1 mass%, and more preferably 0.1 to 0.5 mass%.

The hydrogenated nitrile rubber used may contain other antiaging agents besides the phenol-based antiaging agents, as long as the object of the present invention is not impaired. As other antiaging agents, for example, amine-based antiaging agents such as styrenated diphenylamine and bis(4-t-octylphenyl)amine are preferably used.

### <Hydrogenated nitrile rubber>

The hydrogenated nitrile rubber used is characterized by being composed of the above repeating units, containing the above antiaging agent, and containing a specific weight average molecular weight (Mw), an iodine value, and specific amounts of Ca and Pd.

The weight average molecular weight (Mw) of the hydrogenated nitrile rubber used is in the range of 1,000 to 1,000,000, preferably 2,000 to 500,000, more preferably 4,000 to 400,000, and most preferably 5,000 to 250,000. If the weight average molecular weight (Mw) of the hydrogenated nitrile rubber is in this range, the dispersion stability of the conductive material dispersion can be increased, and the peel strength of the obtained electrode can be increased, which is preferable.

The iodine value of the hydrogenated nitrile rubber used is in the range of 0.1 to 100 mg/100 mg, preferably 1 to 80 mg/100 mg, more preferably 5 to 60 mg/100 mg, and even more preferably 10 to 40 mg/100 mg. When the iodine value of the hydrogenated nitrile rubber is in this range, the viscosity characteristics of the conductive material dispersion, the peel strength of the electrode, and the output characteristics of the electrochemical element are highly balanced, which is preferable.

The Pd content in the hydrogenated nitrile rubber used is 50 ppm or less, preferably 30 ppm or less, more preferably 10 ppm or less. When the Pd content in the hydrogenated nitrile rubber is in this range, cracking of the active material in the electrode is suppressed, and the cycle characteristics of the electrochemical element are improved, which is preferable.

The Ca content in the hydrogenated nitrile rubber used is in the range of 1 to 2000 ppm, preferably 5 to 1500 ppm, more preferably 50 to 800 ppm, and most preferably 100 to 600 ppm. When the Ca content in the hydrogenated nitrile rubber is in this range, cracking of the electrode active material in the obtained electrode can be suppressed well, and the peel strength of the electrode can be increased. In addition, when the Ca content in the hydrogenated nitrile rubber is in this range, when a conductive material dispersion is prepared, the viscosity characteristics of the conductive material dispersion can be increased, the cycle characteristics of the obtained electrochemical element can be increased, and cracking of the electrode active material after cycle testing can be suppressed, which is preferable.

The Rh and/or Ru content (total amount of Rh and Ru) in the hydrogenated nitrile rubber used is not particularly limited, but is usually 0.5 to 50 ppm, preferably 1 to 25 ppm, and more preferably 2 to 20 ppm, which is suitable for preventing cracking of the active material in the electrode produced.

The Na content in the hydrogenated nitrile rubber used is not particularly limited, but is usually 300 ppm or less, preferably 250 ppm or less, more preferably 100 ppm or less, and most preferably 50 ppm or less. When the Na content in the hydrogenated nitrile rubber is in this range, cracking of the active material in the electrode is prevented, and the cycle characteristics of the electrochemical element are improved, which is suitable.

The Mg content in the hydrogenated nitrile rubber used is not particularly limited, but is usually 50 ppm or less, preferably 30 ppm or less, and more preferably 10 ppm or less. When the Mg content in the hydrogenated nitrile rubber is within this range, cracking of the active material in the electrode is suppressed, and the cycle characteristics of the electrochemical element are improved, which is preferable.

The hydrogenated nitrile rubber used is not particularly limited, but is preferably one obtained by emulsion polymerizing a nitrile group-containing monomer and a conjugated diene monomer, coagulating the resulting polymer with calcium chloride, and hydrogenating the polymer. When coagulating an emulsion polymerization liquid to obtain a polymer, the size, shape, and properties of the water-containing crumbs generated will differ depending on the type of coagulant used, and the residues of various secondary materials in the polymerization and coagulation steps that can be removed in the subsequent washing and dehydration steps will differ. It is not possible to prove all of the trace residues of these secondary materials and their reactants, and especially when used in the electrochemical element of the present invention, these slight residues affect various characteristics. For this reason, for electrochemical element applications, it is preferable to use calcium chloride as a coagulant and then hydrogenate the isolated polymer. Furthermore, among calcium (Ca) compounds, those using calcium chloride are preferred because they are easily removed in the subsequent washing and purification processes and can reduce residues in the hydrogenated nitrile rubber.

The hydrogenated nitrile rubber used is preferably one obtained by emulsion polymerizing a nitrile group-containing monomer and a conjugated diene monomer, adding the phenol-based antiaging agent to the resulting polymer, coagulating the polymer with calcium chloride, and hydrogenating the polymer.

The effect of the above-mentioned specific antiaging agent is far greater and more preferable when the hydrogenated nitrile rubber is produced by adding the antiaging agent to the emulsion polymerization liquid obtained by emulsion polymerizing a nitrile group-containing monomer and a conjugated diene monomer, rather than mixing the antiaging agent with the hydrogenated nitrile rubber after production. Although this cannot be measured, it is believed that by coagulating the emulsion polymerization liquid in which the phenol-based antiaging agent is uniformly dispersed with calcium chloride, the antiaging agent is uniformly and finely dispersed in the hydrogenated nitrile rubber obtained as it is, thereby showing a high effect.

### <Method of manufacturing hydrogenated nitrile rubber>

The method of manufacturing the hydrogenated nitrile rubber to be used is not particularly limited, but for example, it can be produced by emulsion polymerizing a nitrile group-containing monomer and a conjugated diene monomer, adding the phenol-based antiaging agent to the resulting polymer, coagulating the polymer with calcium chloride, and then hydrogenating the polymer.

### (Emulsion polymerization)

The monomer components to be used are the same as those described above for the monomer components, and the amount used may be appropriately selected so as to obtain the monomer composition of the hydrogenated nitrile rubber.

The emulsifier is not particularly limited, but examples include anionic emulsifiers, cationic emulsifiers, and nonionic emulsifiers, and preferably includes an anionic emulsifier.

These emulsifiers can be used alone or in combination of two or more kinds. The amount of use is usually 0.01 to 10 parts by mass, preferably 0.1 to 5 parts by mass, and more preferably 1 to 3 parts by mass, per 100 parts by mass of the monomer component.

The polymerization catalyst used in emulsion polymerization is not particularly limited as long as it is one that is usually used in emulsion polymerization, but for example, a redox catalyst consisting of a radical generator and a reducing agent can be used. Examples of radical generators include peroxides and azo compounds, and peroxides are preferable. As peroxides, inorganic peroxides and organic peroxides are used.

The emulsion polymerization method may be any of the usual methods, and may be any of the batch, semi-batch, and continuous methods. The polymerization temperature and polymerization time are not particularly limited, and can be appropriately selected depending on the type of polymerization initiator used, etc. The polymerization temperature is usually in the range of 0 to 100°C, preferably 5 to 80°C, and more preferably 10 to 50°C, and the polymerization time is usually 0.5 to 100 hours, and preferably 1 to 10 hours.

### (Addition of Antiaging Agent)

The phenol-based antiaging agent used is the same as the phenol-based antiaging agent contained in the hydrogenated nitrile rubber, and the method of adding the phenol-based antiaging agent to the emulsion polymerization liquid is not particularly limited and may be in accordance with a conventional method. For example, the phenol-based antiaging agent may be added as it is, or may be emulsified with an emulsifier and then added.

The amount of the phenol-based antiaging agent used may be appropriately selected so as to be the content of the antiaging agent in the hydrogenated nitrile rubber of the present invention, but is usually in the range of 0.001 to 15 parts by mass, preferably 0.01 to 10 parts by mass, more preferably 0.1 to 5 parts by mass, particularly preferably 0.3 to 3 parts by mass, and most preferably 0.5 to 2 parts by mass, per 100 parts by mass of the monomer component.

### (Coagulation process)

The nitrile rubber to be hydrogenated is isolated by coagulating the emulsion polymerization liquid to which the above-mentioned antiaging agent has been added with calcium chloride. In particular, by using calcium chloride as a coagulant and setting the Ca content in the hydrogenated nitrile rubber to a specific range, it is preferable to contribute to the dispersibility (viscosity characteristics) of the conductive material dispersion, extremely increase the peel strength of the electrode to be manufactured, and further increase the cycle characteristics of the electrochemical element and the effect of suppressing cracking of the electrode active material after cycle testing.

The calcium chloride used is usually used as an aqueous solution, and the coagulant concentration of the aqueous solution is usually 0.1 to 70 mass%, preferably 1 to 60 mass%, more preferably 5 to 50 mass%, and particularly preferably 10 to 30 mass%, which is preferable because the particle size of the generated water-containing crumbs can be uniformly concentrated in a specific region.

The temperature in the coagulation reaction is not particularly limited, but it is usually 40°C or higher, preferably 40 to 90°C, and more preferably 50 to 80°C, which is preferable because uniform water-containing crumbs are generated.

### (Washing and drying process)

After the coagulation reaction, the coagulated product can be washed with water and then dried to obtain a polymer to be hydrogenated.

The washing method is not particularly limited and may be any conventional method, but it is effective to wash the water-containing crumbs coagulated with the high concentration calcium chloride aqueous solution with a large amount of water. The amount of water used is usually 10 to 500 times, preferably 25 to 250 times, and more preferably 50 to 100 times, based on 100 parts by mass of the nitrile rubber polymer.

There is no limitation to the temperature of the water used for washing, but it is preferable to use warm water, which is usually 40°C or higher, preferably 40 to 100°C, more preferably 50 to 90°C, and most preferably 60 to 80°C, as this significantly can increase the washing efficiency, and thus suitable. The method of setting the temperature of the washing water at or above the lower limit makes the emulsifier and coagulant liberated from the water-containing crumbs, thereby resulting in the washing efficiency being further improved.

There is no limitation to the washing time, but the washing time is usually in the range of 1 to 120 minutes, preferably 2 to 60 minutes, and more preferably 3 to 30 minutes.

The above-mentioned washed water-containing crumbs can be dried in a conventional manner, for example, using a dryer such as a hot air dryer, a vacuum dryer, an expander dryer, a kneader type dryer, or a screw type extruder.

### (Hydrogenation step)

The obtained polymer may be dissolved in a solvent and then subjected to a hydrogenation catalyst. The hydrogenation reaction may be performed in accordance with a conventional method, and for example, the method described in JP 4509792 B may be performed by subjecting the polymer to a metathesis reaction using a Grubbs catalyst and then hydrogenating the polymer using a Wilkinson catalyst.

The hydrogenation step is a step in which the obtained polymer is hydrogenated using a hydrogenation catalyst, and may be performed after subjecting the obtained polymer to metathesis using a ruthenium catalyst and a co-olefin.

### Metathesis reaction

The metathesis reaction can be carried out, for example, using the method described in JP 4509792 B.

A known ruthenium catalyst can be used as a catalyst for the metathesis reaction. Among them, it is preferable to use a Grubbs catalyst such as bis(tricyclohexylphosphine)benzylidene ruthenium dichloride or 1,3-bis(2,4,6-trimethylphenyl)-2-(imidazolidinylidene)(dichlorophenylmethylene)(tricyclohexylphosphine)ruthenium as a catalyst for the metathesis reaction.

The metathesis reaction is carried out in the presence of a co-olefin.

Examples of co-olefin include olefins having 2 to 16 carbon atoms, such as ethylene, isobutane, styrene, and 1-hexane, and functional group-containing unsaturated compounds, such as cis-2-butene-1,4-diol, 3-butene-1-amine, vinyltrimethoxysilane, methoxypolyalkylene glycol methacrylate, and 2-(methacryloyloxy)ethanesulfonic acid, with functional group-containing unsaturated compounds being preferred.

The amount of co-olefin used is usually 0.1 to 20 parts by mass, preferably 0.5 to 10 parts by mass, and more preferably 1 to 5 parts by mass, per 100 parts by mass of the polymer.

Examples of the solvent that can be used are those that do not inactivate the catalyst or interfere with the reaction. Examples of preferred solvents include, but are not limited to, dichloromethane, benzene, toluene, tetrahydrofuran, cyclohexane, and monochlorobenzene (MCB), with MCB being the most preferred. In some cases, the co-olefin itself can act as a solvent, in which case no other solvent is required.

The polymer concentration in the metathesis reaction is not important but is usually in the range of 1 to 20% by weight, preferably 6 to 15% by weight.

The reaction solution in the metathesis reaction is usually stirred vigorously, for example, in the range of 200 to 1000 rpm, preferably 300 to 900 rpm, more preferably 500 to 800 rpm.

The temperature of the metathesis reaction is usually in the range of 20-140°C, preferably 60-120°C. The reaction time depends on many factors, such as the concentration of cement, the amount of catalyst used, and the reaction temperature, but is usually complete within 2 hours. The progress of the metathesis reaction can be monitored using standard analytical methods, such as GPC or solution viscosity.

### Hydrogenation reaction

The hydrogenation reaction can be carried out by dissolving the polymer in a solvent and then adding a hydrogenation catalyst, but the hydrogenation reaction after the metathesis can be carried out in the same reaction container as that used in the metathesis reaction, without isolating the metathesis product, by adding the hydrogenation catalyst to the container and then carrying out hydrogenation treatment, thereby making it possible to produce hydrogenated nitrile rubber that is suitable.

The solvent for the hydrogenation reaction can be either an aqueous solvent or an organic solvent, but is preferably an organic solvent. Suitable organic solvents include, for example, acetone, methyl ethyl ketone, ethyl acetate, tetrahydrofuran, 1,3-dioxane, benzene, toluene, methylene chloride, chloroform, monochlorobenzene (MCB), and dichlorobenzene. Among these, MCB is particularly suitable as it is a good solvent for both the nitrile group-containing nitrile rubber before hydrogenation and the hydrogenated nitrile rubber after hydrogenation.

The hydrogenation can be carried out without any particular restrictions as long as it is a method known in the art. For example, this can be carried out using the method described in JP 6309634 B, and it is particularly preferable to use a known homogeneous hydrogenation catalyst such as the Wilkinson catalyst ((PPh₃)₃RhCl). In addition, the Grubbs catalyst is converted into the dihydride complex (PR₃)₂RuCl₂H₂, which is itself an olefin hydrogenation catalyst, in the presence of hydrogen. The hydrogenation reaction can be carried out without adding the Wilkinson catalyst, but the hydrogenation rate tends to be slower. Specifically, a ruthenium-based catalyst or a rhodium-based catalyst can be used as the hydrogenation catalyst in the hydrogenation step.

The amount of the hydrogenation catalyst used can be appropriately selected depending on the purpose of use and the iodine value, but is usually in the range of 0.001 to 0.5 parts by mass, preferably 0.005 to 0.1 parts by mass, and more preferably 0.01 to 0.05 parts by mass, based on 100 parts by mass of the polymer before hydrogenation.

In the hydrogenation reaction, a cocatalyst can be used as necessary. Examples of the cocatalyst for the Wilkinson catalyst include phosphine, diphosphine, and triphenylphosphine, and triphenylphosphine is preferred. These cocatalysts can be used alone or in combination of two or more. The amount of the cocatalyst used is usually 0.01 to 15 parts by mass, preferably 0.1 to 10 parts by mass, and more preferably 0.5 to 5 parts by mass, based on 100 parts by mass of the polymer to be hydrogenated.

The polymer concentration in the hydrogenation reaction is not particularly limited as long as the polymer can be dissolved but is usually in the range of 1 to 30 mass%, preferably 5 to 25 mass%, and more preferably 7 to 20 mass%.

The pressure in the hydrogenation reaction is not particularly limited but is usually in the range of 0.1 to 30 MPa, preferably 1 to 20 MPa, and more preferably 5 to 15 MPa.

The hydrogenation reaction temperature is usually in the range of 30 to 200°C, preferably 50 to 170°C, and more preferably 100 to 150°C. The reaction time is usually 1 to 50 hours, and preferably 2 to 25 hours.

The hydrogenation reaction can be stopped by reducing the pressure of the reactor or by cooling the reactor when the desired hydrogenation level is reached. Residual hydrogen is usually removed by nitrogen purging. The hydrogenation catalyst can also be removed before removing the solvent and isolating the hydrogenated nitrile rubber from the organic layer.

The hydrogenated nitrile rubber after the hydrogenation reaction can be used as the positive electrode binder of the present invention by removing impurities from the hydrogenated nitrile rubber.

### (Purification process)

In the method for producing hydrogenated nitrile rubber of the present invention, a purification process is provided after the hydrogenation step to remove impurities from the hydrogenated polymer (hydrogenated nitrile rubber).

The method for removing impurities from hydrogenated nitrile rubber is not particularly limited, but it is preferable to carry out adsorbent treatment, so that the calcium (Ca) content in the hydrogenated nitrile rubber is 1 to 2000 ppm, or the hydrogenation catalyst can be easily reduced.

The adsorbent is not particularly limited, but examples include activated carbon, ion exchange resin, and synthetic zeolite, and is preferably activated carbon.

The adsorbent treatment can be carried out by adding an adsorbent to the reaction liquid containing the hydrogenated nitrile rubber after hydrogenation and mixing it. There is no particular limited to the amount of adsorbent added, but it is usually in the range of 0.001 to 1 part by mass, preferably 0.05 to 0.5 parts by mass, and more preferably 0.01 to 0.4 parts by mass, per 100 parts by mass of hydrogenated nitrile rubber. The mixing temperature is usually room temperature to 80°C, preferably room temperature to 60°C, and the mixing time is usually 1 minute to 1 hour, preferably 20 to 40 minutes.

After the adsorbent treatment, the adsorbent can be removed by filtration or decantation, and the filtrate can be dried to obtain hydrogenated nitrile rubber.

### <Hydrogenated nitrile rubber bale>

The hydrogenated nitrile rubber bale used is a bale formed from the above hydrogenated nitrile rubber. By bailing, the effect of the positive electrode binder of the present invention can be expressed without variation, which is preferable.

The shape of the hydrogenated nitrile rubber bale is not particularly limited, but is usually rectangular. The size is not particularly limited, but the width is usually in the range of 100 to 800 mm, preferably 200 to 500 mm, and more preferably 250 to 450 mm, the length is usually in the range of 300 to 1200 mm, preferably 400 to 1000 mm, and more preferably 500 to 800 mm, and the height is usually in the range of 50 to 500 mm, preferably 100 to 300 mm, and more preferably 150 to 250 mm.

The hydrogenated nitrile rubber can be baled in the usual manner, for example, by putting the above-mentioned dried rubber in a baler and compressing it. The compression pressure is appropriately selected depending on the purpose of use, but is usually in the range of 0.1 to 15 MPa, preferably 0.5 to 10 MPa, and more preferably 1 to 5 MPa. The compression time is not particularly limited, but is usually in the range of 1 to 60 seconds, preferably 5 to 50 seconds, and more preferably 10 to 40 seconds. Also, dried rubber sheets can be made and laminated to form a bale. Laminating sheets to form a bale is easy to manufacture, produces a bale with few air bubbles (high specific gravity), and is suitable for excellent storage stability.

When using hydrogenated nitrile rubber bales as a binder for positive electrodes, they are broken down into small pieces and dissolved or dispersed in a solvent.

### [Positive electrode binder]

The positive electrode binder of the present invention is made by dissolving or dispersing the hydrogenated nitrile rubber or the hydrogenated nitrile rubber bale in N-methylpyrrolidone (NMP), and is suitable as a material for manufacturing a positive electrode of an electrochemical element. Specifically, the positive electrode binder of the present invention is excellent in viscosity characteristics (dispersibility) and stability of the conductive material dispersion when mixed with a conductive material to form a conductive material dispersion, so that the manufactured electrode is smooth and has high electrical conductivity and peel strength, and is also effective in improving the output characteristics and cycle characteristics of an electrochemical element and in suppressing the cracking of the electrode active material after cycle testing.

The positive electrode binder of the present invention can be combined with other components as necessary, in addition to the hydrogenated nitrile rubber and NMP. The other components are not particularly limited, but examples thereof include binders (polyvinylidene fluoride, polyacrylate, and the like) other than hydrogenated nitrile rubber, reinforcing materials, leveling agents, viscosity adjusters, and electrolyte additives. These components are not particularly limited as long as they do not affect the battery reaction, and known ones can be used. The positive electrode binder of the present invention may also contain a solvent other than NMP to the extent that the characteristics of the present invention are not impaired. These other components may be used alone or in combination of two or more types in any ratio.

The solid concentration of the positive electrode binder of the present invention is not particularly limited but is usually in the range of 0.1 to 40 mass%, preferably 0.5 to 20 mass%, and more preferably 1 to 10 mass%.

The hydrogenated nitrile rubber, NMP, and other components used as necessary may be mixed in a conventional manner.

### [Electrochemical element]

The positive electrode binder of the present invention can be used for manufacturing a positive electrode by mixing it with a conductive material and then mixing it with a positive electrode active material to obtain a positive electrode mixture layer slurry, which is then applied to a current collector and dried.

### (Conductive material)

The conductive material is a component that functions to ensure electrical contact between electrode active materials. Carbonaceous materials can be suitably used as the conductive material. Examples of such carbonaceous materials include carbon black (e.g., acetylene black, Ketjen Black (registered trademark), furnace black, and the like), single-walled or multi-walled carbon nanotubes (multi-walled carbon nanotubes include cup-stacked types), carbon nanohorns, vapor-grown carbon fibers, milled carbon fibers obtained by crushing polymer fibers after firing, single-layered or multi-layered graphene, and carbon nonwoven fabric sheets obtained by firing nonwoven fabric made of polymer fibers. These carbonaceous materials may be used alone or in combination of two or more types in any ratio. Among them, carbon nanotubes (CNTs) are preferred from the viewpoint of forming a preferable conductive path.

When the positive electrode binder of the present invention is mixed with the conductive material, the quantitative ratio of the conductive material to the positive electrode binder is not particularly limited. For example, the conductive material and the positive electrode binder may be mixed in a range of usually 1 to 100 parts by mass, preferably 5 to 50 parts by mass, and more preferably 10 to 30 parts by mass of the hydrogenated nitrile rubber per 100 parts by mass of the conductive material to obtain a conductive material dispersion. In addition, when mixing the positive electrode binder and the conductive material, NMP can be added as necessary to adjust the viscosity.

The method of mixing the positive electrode binder of the present invention and the conductive material is not particularly limited, and may, for example, be carried out using a known mixing device.

### (Positive electrode active material)

The positive electrode active material is not particularly limited, but when the electrochemical element is a lithium-ion secondary battery, it can be a metal oxide containing lithium (Li). As the positive electrode active material, a positive electrode active material containing at least one selected from the group consisting of cobalt (Co), nickel (Ni), manganese (Mn), and iron (Fe) in addition to lithium (Li) is preferable. Examples of such positive electrode active materials include lithium-containing cobalt oxide (LiCoO₂), lithium manganate (LiMn₂O₄), lithium-containing nickel oxide (LiNiO₂), lithium-containing composite oxide of Co-Ni-Mn, lithium-containing composite oxide of Ni-Mn-Al, lithium-containing composite oxide of Ni-Co-Al, olivine-type lithium manganese phosphate (LiMnPO₄), olivine-type lithium iron phosphate (LiFePO₄), lithium-excess spinel compound represented by Li₁₊ₓMn₂₋ₓO₄ (0<X<2), Li[Ni_{0.17}Li_{0.2}Co_{0.07}Mn_{0.56}]O₂, LiNi_{0.5}Mn_{1.5}O₄, Li[Ni_{0.5}Co_{0.2}Mn_{0.3}]O₂, and the like. The particle size of the positive electrode active material is not particularly limited but can be the same as that of the conventionally used electrode active material. The positive electrode active material may be used alone or in any combination of two or more kinds in any ratio.

The positive electrode active material may be mixed with the mixture of the positive electrode binder and conductive material to form a positive electrode mixture layer slurry. The mixing method is not particularly limited and may be performed using a known mixing device. The amount of the positive electrode active material is not particularly limited and may be within the range of conventionally used amounts.

### <Electrode for electrochemical element>

The positive electrode using the positive electrode binder of the present invention can be obtained by applying the positive electrode mixture layer slurry onto a current collector and drying it. Since the positive electrode mixture layer is formed containing the hydrogenated nitrile rubber described above, it has excellent flexibility and excellent electrode peel strength, and the occurrence of cracking of the active material is small.

### [Example]

The present invention will be specifically described hereinafter based on examples, but the present invention is not limited to these examples. In the following description, the symbols "%", "ppm", and "parts" representing amounts are based on mass unless otherwise specified.

In addition, in a polymer produced by copolymerizing a plurality of types of monomers, the ratio of a monomer unit formed by polymerizing a certain monomer in the polymer usually coincides with the ratio (feed ratio) of the certain monomer to the total monomers used in the polymerization of the polymer, unless otherwise specified. In addition, in the case where a polymer is a hydrogenated polymer obtained by hydrogenating a polymer containing a conjugated diene monomer unit, the total content ratio of the unhydrogenated conjugated diene monomer unit and the alkylene structural unit as the hydrogenated conjugated diene monomer unit in the hydrogenated polymer coincides with the ratio (feed ratio) of the conjugated diene monomer to the total monomers used in the polymerization of the polymer.

In the examples and the comparative examples, various measurements and evaluations were carried out according to the following methods.

### <Iodine value>

The iodine value of the hydrogenated nitrile rubber was measured in accordance with JIS K 6235.

### <Weight average molecular weight>

The weight average molecular weight (Mw) of the hydrogenated nitrile rubber was measured by gel permeation chromatography (GPC) using a 10 mM LiBr-dimethylformamide (DMF) solution under the following measurement conditions.
- Separation column: Shodex KD-806M (Showa Denko K.K.)
- Detector: Differential refractometer detector RID-10A (Shimadzu Corporation)
- Flow rate of eluent: 0.3 mL/min
- Column temperature: 40°C
- Standard polymer: TSK standard polystyrene (Tosoh Corporation)

### <Metal content>

About 0.5 g of hydrogenated nitrile rubber was collected in solid content and dissolved in about 5 mL of concentrated sulfuric acid, then carbonized on a heater and incinerated in an electric furnace at 1000°C for about 3 hours. After cooling, about 2 mL of concentrated nitric acid was gradually added for wet decomposition. After decomposition, the acid was concentrated and the volume was adjusted to 10 mL with ultrapure water, and the metal ion concentration was measured using an ICP-MS (Agilent, ICP-MS 7900). The metal ion concentration contained in the hydrogenated nitrile rubber was calculated from the measured values. The metal ions measured were calcium ions, rhodium ions, ruthenium ions, palladium ions, iron ions, sodium ions and magnesium ions.

### <Conductive material dispersion viscosity>

The conductive material dispersions obtained in each Example and Comparative Example were measured for viscosity for 120 seconds at a temperature of 25°C and a shear rate of 10 (1/s) using a rheometer (Anton Paar, "MCR302"), and the average viscosity measured from 61 seconds to 120 seconds was evaluated according to the following criteria.
A: 1 Pa.s or less
B: More than 1 Pa.s and less than 5 Pa.s
C: More than 5 Pa.s and less than 10 Pa.s
D: More than 10 Pa.s

### <Conductive material dispersion stability>

After measuring the dispersion viscosity (η0) for the conductive material dispersions obtained in each example and comparative example, they were stored in a sealed container at 25°C for 10 days. After that, the dispersion viscosity was measured again (η1), and the viscosity change rate was calculated according to the following, which was regarded as the conductive material dispersion stability. It was evaluated according to the following criteria. Viscosity change rate Δη = η1/η0 × 100
A: Viscosity change rate Δη is 90% or more and 110% or less
B: Viscosity change rate Δη is 80% or more and less than 90%
C: Viscosity change rate Δη is 70% or more and less than 80%
D: Viscosity change rate Δη is less than 70% or more than 110%

### <Peel strength>

The positive electrodes prepared in the examples and the comparative examples were cut into rectangles measuring 100 mm in length and 10 mm in width to prepare test pieces. With the side having the positive electrode mixture layer facing down, cellophane tape (compliant with JIS Z1522) was attached to the surface of the positive electrode mixture layer, and one end of the current collector was pulled vertically at a pulling speed of 100 mm/min to measure the stress when peeled off (the cellophane tape was fixed to the test table). The measurement was carried out three times, and the average value was calculated to determine the peel strength, which was evaluated according to the following criteria. The evaluation shows that the higher the peel strength value, the stronger the adhesion of the positive electrode mixture layer to the current collector made of aluminum foil is performed.
A: Peel strength is 15 N/m or more
B: Peel strength is 10 N/m or more and less than 15 N/m
C: Peel strength is 5 N/m or more and less than 10 N/m
D: Peel strength is less than 5 N/m

### <Cycle characteristics>

After injecting electrolyte, the lithium-ion secondary batteries produced in the examples and the comparative examples were left to stand at a temperature of 25°C for 5 hours. Next, they were charged to a cell voltage of 3.65V by a constant current method of 0.2C at a temperature of 25°C, and then aged at a temperature of 60°C for 12 hours. Thereafter, they were discharged to a cell voltage of 3.00V by a constant current method of 0.2C at a temperature of 25°C. Then, they were CC-CV charged (upper cell voltage 4.20V) by a constant current method of 0.2C, and CC discharged to 3.00V by a constant current method of 0.2C. This charge/discharge cycle in 0.2C was repeated three times.

Next, 300 cycles of charge/discharge were performed at a charge/discharge rate of 1.0C, with a cell voltage of 4.20-3.00V in a 45°C environment. The discharge capacity of the first cycle was defined as X1, and the discharge capacity of the 300th cycle was defined as X2. Using the discharge capacities X1 and X2, the capacity retention rate = (X2/X1) × 100 (%) was calculated and evaluated according to the following criteria. A higher capacity retention rate indicates that the lithium-ion secondary battery has excellent cycle characteristics.
A: Capacity retention rate is 85% or more
B: Capacity retention rate is 80% or more but less than 85%
C: Capacity retention rate is 75% or more but less than 80%
D: Capacity retention rate is less than 75%

### <Whether or not there is cracking of active material after cycling>

The lithium-ion secondary batteries produced in the examples and the comparative examples were disassembled after the cycle test, and the cross-sectional SEM images of the removed positive electrodes were observed at 1000x magnification, and the number of cracks observed in the active material was evaluated as follows.
A: Less than 2 cracked active materials
B: Number of cracked active materials is 2 or more but less than 5
C: Number of cracked active materials is 5 or more but less than 9
D: Number of cracked active materials is 9 or more

### <Output characteristics>

The output characteristics of the lithium-ion secondary batteries produced in the examples and the comparative examples were evaluated by measuring the I-V resistance using the following method.

Similarly to the cycle characteristics, a lithium-ion secondary battery which had undergone three times repeatedly aging treatment and 3 charge and discharge was charged at 25°C until the charge rate reached 50% (i.e., for a cell capacity of 700mAh, until the charge capacity reached 350mAh), and the resistance value was measured with the following procedure.
(1) Calculate the voltage change ΔV (0.2) when the battery is discharged for 30 seconds using the 0.2C constant current method (I0.2).
(2) Charge the battery for 30 seconds using the 0.2C constant current method.
(3) Calculate the voltage change ΔV (1.0) when the battery is discharged for 30 seconds using the 1.0C constant current method (I1.0).

I-V resistance (Ω) = {ΔV (1.0) - ΔV (0.2)} / (I1.0 - I0.2)
Evaluation was performed according to the calculated I-V resistance value as follows:
   A: 0.25Ω or less
   B: 0.25Ω or more and 0.30Ω or less
   C: 0.30Ω or more and 0.35Ω or less
   D: 0.35Ω or more

### (Example 1)

### <Production of hydrogenated nitrile rubber>

### -Emulsion polymerization process to washing and drying process-

In a reactor with an internal volume of 10 liters, 100 parts of ion-exchanged water, 33 parts of acrylonitrile as an α,β-ethylenically unsaturated nitrile monomer, and 67 parts of 1,3-butadiene as a conjugated diene monomer were charged, and 2 parts of potassium oleate as an emulsifier, 0.1 parts of potassium phosphate as a stabilizer, and 0.3 parts of tert-dodecyl mercaptan (TDM) as a molecular weight regulator were added. Emulsion polymerization was carried out at a temperature of 5°C in the presence of 0.35 parts of potassium persulfate as a polymerization initiator to copolymerize acrylonitrile and 1,3-butadiene.

When the polymerization conversion rate reached 89%, 0.2 parts of hydroxylamine sulfate was added per 100 parts of monomer to terminate the polymerization. The mixture was then heated and steam distilled at approximately 90°C under reduced pressure to recover the residual monomer, after which 0.1 parts of dibutylhydroxytoluene (BHT), a phenol-based antiaging agent, was added to obtain an emulsion polymerization liquid.

A 25% aqueous solution of calcium chloride (CaCl₂) was added as a coagulant in an amount of 3 parts per 100 parts of polymer solids in the obtained emulsion polymerization liquid while stirring, to coagulate the polymer in the emulsion polymerization liquid. The polymer was then filtered, washed by passing ion-exchanged water in an amount 50 times the polymer weight, and dried at a temperature of 90°C under reduced pressure to obtain a polymer.

### -Hydrogenation step I (metathesis reaction)-

Next, 9 parts of the obtained polymer were dissolved in 141 parts of monochlorobenzene, a halogenated hydrocarbon, and the solution was put into a reactor. Then, after heating the reactor to 80°C, 2 L of a monochlorobenzene solution containing bis(tricyclohexylphosphine)benzylidene ruthenium dichloride as a Grubbs catalyst was added so that the amount of Grubbs catalyst relative to the polymer was 1000 ppm. Then, 4.4 parts of cis-2-butene-1,4-diol as a co-olefin was added per 100 parts of precursor 1, and the metathesis reaction of the polymer was carried out at a stirring speed of 600 rpm. During the reaction, the temperature was kept constant using a temperature control device and a cooling coil connected to a heat sensor.

### -Hydrogenation step II (hydrogenation reaction)-

Then, while continuing stirring, the inside of the reactor was degassed three times with 0.7 MPa H₂. The temperature of the reactor was then raised to 130°C, and 1 L of a monochlorobenzene solution containing Wilkinson's catalyst and triphenylphosphine was added to the reactor. The amount of Wilkinson's catalyst and the amount of triphenylphosphine per 100 parts of polymer was 0.03 parts and 1 part, respectively. The temperature was then raised to 138°C, and the hydrogenation reaction of the polymer was carried out under the condition of a hydrogen pressure (gauge pressure) of 8.4 MPa.

### - Purification process -

After the hydrogenation reaction was completed, 0.2 parts of activated carbon with an average diameter of 15 µm was added to the reactor and stirred for 30 minutes to adjust the concentration of divalent or higher metal ions including calcium ions. Then, the mixture was filtered through a filter with a pore size of 5 µm. The filtrate was heated and dried until the monochlorobenzene solvent reached 50 ppm, and hydrogenated nitrile rubber A was isolated. The iodine value, weight average molecular weight, and metal content of the obtained hydrogenated nitrile rubber A were measured. The results are shown in Table 1. In addition, 20 parts (20 kg) of the isolated nitrile rubber A were filled into a 300 × 650 × 300 mm baler and pressed at a pressure of 3 MPa for 30 seconds to obtain nitrile rubber bale A. When the hydrogenated nitrile rubber bale A was subjected to the same measurements as the hydrogenated nitrile rubber A, the measured values were the same.

### <Preparation of positive electrode binder>

920 parts of NMP were weighed out and placed in an internal volume 2 L of container equipped with a stirring blade and heated to 80°C. Next, 80 parts of the hydrogenated nitrile rubber A cut into pieces of about 1 cm square from the hydrogenated nitrile rubber bale A produced above was added in the container, and the mixture was dissolved while continuing to be stirred for 5 hours to prepare a positive electrode binder A with a solid concentration of 8%.

### <Preparation of conductive material dispersion>

5 parts of multi-walled carbon nanotubes (BET specific surface area: 250 m²/g) as a conductive material, 12.5 parts (equivalent to 1 part as solids) of the positive electrode binder A with a solid concentration of 8% obtained as described above, and 82.5 parts of NMP as an organic solvent were added, and the mixture was stirred using a disperser (3000 rpm, 10 minutes). After that, a bead mill (Ashizawa Finetech, "LMZ015") using zirconia beads with a diameter of 1 mm was used to mix at a peripheral speed of 8 m/s for 1 hour to prepare a conductive material dispersion, and the viscosity was measured, with the results shown in Table 1. The stability of the conductive material dispersion was also evaluated, with the results shown in Table 1.

### <Preparation of slurry for secondary battery positive electrode>

98.0 parts of a ternary active material (LiNi_{0.5}Co_{0.2}Mn_{0.3}O₂) (average particle size: 10 µm) having a layered structure as a positive electrode active material, 1.0 part of polyvinylidene fluoride as a binder, 1.0 part of the above-mentioned conductive material dispersion (solid content equivalent), and NMP were added to the above-mentioned conductive material dispersion, and mixed with a planetary mixer (60 rpm, 30 minutes) to prepare a positive electrode slurry. The amount of NMP added was adjusted so that the viscosity (The viscosity was measured using a single cylindrical rotational viscometer according to JIS Z8803:1991. Temperature: 25°C, rotation speed: 60rpm) of the resulting positive electrode slurry was within the range of 4000 to 5000 mPa·s.

### <Preparation of the positive electrode>

A 20 µm thick aluminum foil was prepared as a current collector. The above positive electrode slurry was applied to the aluminum foil using a comma coater so that the weight after drying is 20 mg/cm². The positive electrode was dried for 5 minutes at 120°C and 5 minutes at 130°C, and then heated for 10 hours at 60°C to obtain a positive electrode sheet. This positive electrode sheet was rolled using a roll press to produce a sheet-shaped positive electrode consisting of a positive electrode mixture layer with a density of 3.5 g/cm³ and aluminum foil. This sheet-shaped positive electrode was cut to a width of 4.8 cm and a length of 50 cm to prepare a positive electrode for a lithium-ion secondary battery.

The peel strength of the obtained positive electrode for a lithium-ion secondary battery was evaluated. The results are shown in Table 1.

### <Preparation of negative electrode for lithium-ion secondary battery>

In a 5 MPa pressure container equipped with a stirrer, 33 parts of 1,3-butadiene as an aliphatic conjugated diene monomer, 3.5 parts of itaconic acid as a carboxylic acid group-containing monomer, 63.5 parts of styrene as an aromatic vinyl monomer, 0.4 parts of sodium dodecylbenzene sulfonate as an emulsifier, 150 parts of ion-exchanged water, and 0.5 parts of potassium persulfate as a polymerization initiator were placed and thoroughly stirred, then heated to 50°C to initiate polymerization. When the polymerization conversion rate reached 96%, the mixture was cooled to stop the polymerization reaction, and a mixture containing a particulate binder (styrene-butadiene copolymer) was obtained. After adjusting the pH to 8 by adding a 5% aqueous sodium hydroxide solution to the above mixture, unreacted monomers were removed by heating and vacuum distillation. The mixture was then cooled to 30°C or less to obtain an aqueous dispersion containing a binder for the negative electrode.

Next, 48.75 parts of artificial graphite and 48.75 parts of natural graphite were added as negative electrode active materials, and 1 part of carboxymethyl cellulose was added as a thickener to a planetary mixer. The mixture was then diluted with ion-exchanged water to a solid concentration of 60%, and then kneaded for 60 minutes at a rotation speed of 45 rpm. Then, 1.5 parts of the aqueous dispersion containing the negative electrode binder obtained as described above was added as a solid equivalent and kneaded for 40 minutes at a rotation speed of 40 rpm. Then, ion-exchanged water was added to the mixture so that the viscosity was 3000±500 mPa·s (measured with a B-type viscometer at 25°C and 60 rpm), thereby preparing a slurry for the negative electrode mixture layer.

Next, a copper foil with a thickness of 15 µm was prepared as a current collector. The negative electrode slurry was applied to both sides of copper foil so that the coating amount after drying was 10 mg/cm², and then dried at 80°C for 5 minutes and 120°C for 5 minutes to obtain a negative electrode raw sheet. This negative electrode raw sheet was rolled with a roll press to produce a sheet-shaped negative electrode consisting of a negative electrode mixture layer (both sides) with a density of 1.6 g/cm³ and copper foil. The sheet-shaped negative electrode was then cut to a width of 5.0 cm and a length of 52 cm to obtain a lithium-ion secondary battery negative electrode.

### <Preparation of lithium-ion secondary battery>

The prepared positive electrode for lithium-ion secondary battery and negative electrode for lithium-ion secondary battery were wound with the electrode mixture layers facing each other, with a separator (microporous film made of polyethylene) with a thickness of 15 µm interposed between them, using a core with a diameter of 20 mm to obtain a wound body. The obtained wound body was then compressed in one direction at a speed of 10 mm/sec until the thickness became 4.5 mm. The compressed wound body had an elliptical shape when seen in a plan view, and the ratio of its major axis to its minor axis (major axis/minor axis) was 7.7.

Further, a 1.0 M LiPF₆ solution (solvent: mixed solvent of ethylene carbonate (EC)/diethyl carbonate (DEC) = 3/7 (volume ratio), additive: containing 2 volume% vinylene carbonate (solvent ratio)) was prepared as the electrolyte.

The compressed wound body was then housed in an aluminum laminate case together with 3.2 g of non-aqueous electrolyte. A nickel lead wire was then connected to a predetermined location of the negative electrode, and an aluminum lead wire was connected to a predetermined location of the positive electrode, after which the opening of the case was thermally sealed to obtain a lithium-ion secondary battery. This lithium-ion secondary battery was a pouch-shaped battery of a predetermined size capable of housing the wound body, and the nominal capacity of the battery was 700 mAh.

The obtained lithium-ion secondary battery was evaluated for output characteristics, cycle characteristics, and cracking of the electrode active material after cycling. The results are shown in Table 1.

### (Example 2)

Hydrogenated nitrile rubber B was obtained and positive electrode binder B was produced in the same manner as in Example 1, except that the amount of activated carbon used in the purification process was changed to 0.5 parts. The characteristics of the electrochemical device using hydrogenated nitrile rubber B and positive electrode binder B were evaluated and the results are shown in Table 1.

### (Example 3)

Hydrogenated nitrile rubber C was obtained and positive electrode binder C was produced in the same manner as in Example 1, except that the amount of activated carbon used in the purification process was changed to 0.08 parts. The characteristics of the electrochemical device using hydrogenated nitrile rubber C and positive electrode binder C were evaluated and the results are shown in Table 1.

### (Example 4)

Hydrogenated nitrile rubber D was obtained and positive electrode binder D was produced in the same manner as in Example 1, except that the amount of activated carbon used in the purification process was changed to 0.07 parts. The characteristics of the electrochemical device using hydrogenated nitrile rubber D and positive electrode binder D were evaluated, and the results are shown in Table 1.

### (Example 5)

Hydrogenated nitrile rubber E was obtained and positive electrode binder E was produced in the same manner as in Example 1, except that the amount of activated carbon used in the purification process was changed to 0.05 parts. The characteristics of the electrochemical device using hydrogenated nitrile rubber E and positive electrode binder E were evaluated, and the results are shown in Table 1.

### (Example 6)

Hydrogenated nitrile rubber F was obtained and positive electrode binder F was produced in the same manner as in Example 1, except that the amount of activated carbon used in the purification process was changed to 0.02 parts. The characteristics of the electrochemical device using hydrogenated nitrile rubber F and positive electrode binder F were evaluated, and the results are shown in Table 1.

### (Example 7)

Hydrogenated nitrile rubber G was obtained in the same manner as in Example 1, except that the amount of Grubbs catalyst in the metathesis reaction was changed to 3000 ppm. The characteristics of the electrochemical element using hydrogenated nitrile rubber G and positive electrode binder G were evaluated, and the results are shown in Table 1.

### (Example 8)

Hydrogenated nitrile rubber H was obtained in the same manner as in Example 1, except that the amount of Grubbs catalyst in the metathesis reaction was changed to 500 ppm. The characteristics of the electrochemical element using hydrogenated nitrile rubber H and positive electrode binder H were evaluated, and the results are shown in Table 1.

### (Example 9)

Hydrogenated nitrile rubber I was obtained in the same manner as in Example 1, except that the amount of Grubbs catalyst in the metathesis reaction was changed to 400 ppm. The characteristics of the electrochemical element using hydrogenated nitrile rubber I and positive electrode binder I were evaluated, and the results are shown in Table 1.

### (Example 10)

Hydrogenated nitrile rubber J was obtained in the same manner as in Example 1, except that the amount of Grubbs catalyst in the metathesis reaction was changed to 200 ppm. The characteristics of an electrochemical device using hydrogenated nitrile rubber J and positive electrode binder J were evaluated, and the results are shown in Table 2.

### (Comparative Example 1)

Hydrogenated nitrile rubber K was obtained in the same manner as in Example 1, except that no antiaging agent was added. The characteristics of an electrochemical device using hydrogenated nitrile rubber K and positive electrode binder K were evaluated, and the results are shown in Table 1.

### (Comparative Example 2)

No antiaging agent was added, and in hydrogenation step II, 1 L of monochlorobenzene solution containing Wilkinson's catalyst and triphenylphosphine was not added to the reactor. Instead, palladium-silica (Pd/SiO₂) was placed in the autoclave as a catalyst so that the amount of Pd in the polymer was 1000 ppm. The hydrogenation reaction was carried out under conditions of a temperature of 90°C and a hydrogen pressure of 3.0 MPa. Except that 1 part of aminopropyl-modified silica (product name "QuadraSil AP", SIGMA-ALDRICH, silica with aminopropyl groups introduced on the surface, average particle size 54 µm) was added in the purification process in addition to activated carbon, hydrogenated nitrile rubber L was obtained in the same manner as in Example 1. The characteristics of the electrochemical element using hydrogenated nitrile rubber L and positive electrode binder L were evaluated, and the results are shown in Table 1.

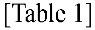

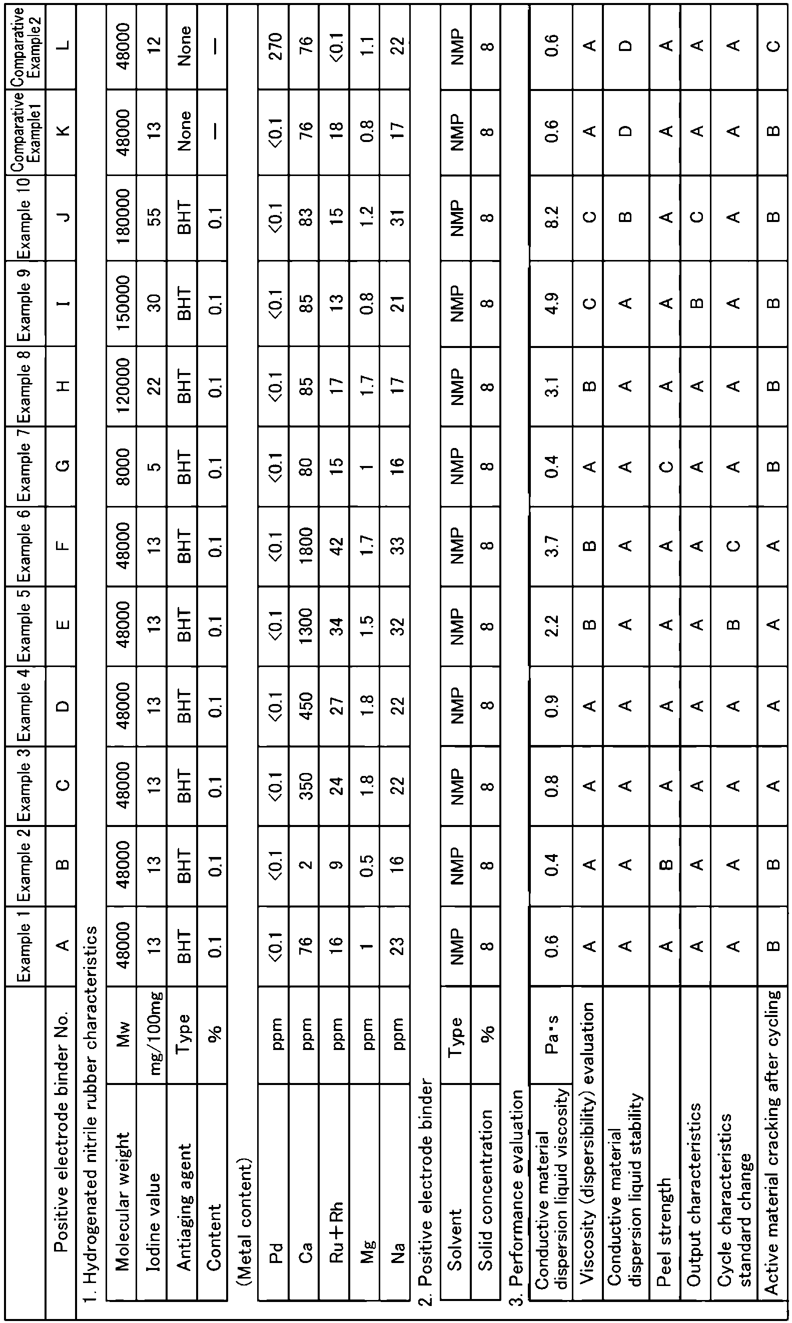

Table 1 shows that the positive electrode binders A to J of the present invention are prepared by dissolving or dispersing a specific hydrogenated nitrile rubber in N-methylpyrrolidone (NMP), and that the viscosity characteristics and stability of the conductive material dispersion are improved, thereby improving the peel strength of the electrode produced, the output characteristics, the cycle characteristics, and the effect of suppressing cracking of the electrode active material after the cycle test of the electrochemical element, and that each characteristic is highly balanced (comparison between Examples 1 to 10 and Comparative Examples 1 and 2).

The viscosity characteristics (dispersibility) of the conductive material dispersion correlate with the Ca content in the hydrogenated nitrile rubber, and the higher the Ca content, the higher the viscosity and the worse the dispersibility tends to be (comparison between Examples 1 to 6). It is also shown that the dispersibility of the conductive material dispersion is greatly affected by the iodine value of the hydrogenated nitrile rubber, and that the viscosity of the dispersion increases rapidly as the iodine value increases (comparison between Examples 7 to 10). From Table 1, it can be seen that the viscosity characteristics (dispersibility) of the conductive material dispersion are excellent when the iodine value of the hydrogenated nitrile rubber is small and the Ca content in the hydrogenated nitrile rubber is small.

The stability of the conductive material dispersion is greatly affected by the presence or absence of dibutylhydroxytoluene (BHT), a phenol-based antiaging agent, and from Table 1, it can be seen that the stability is extremely deteriorated when it is not contained (Comparative Examples 1-2). In addition, it can be seen that the stability of the conductive material dispersion is also affected by the iodine value of the hydrogenated nitrile rubber, and that the smaller the iodine value, the better (Examples 7-10).

From Table 1, it can be seen that the peel strength of the electrode tends to deteriorate as the iodine value of the hydrogenated nitrile rubber becomes smaller (Example 7). In addition, it can be seen that the peel strength is also affected by the calcium (Ca) content in the hydrogenated nitrile rubber, and that the higher the Ca content, the better (comparison within Examples 1-6).

As can be seen from Table 1, the output characteristics of the electrochemical element tend to worsen as the iodine value of the hydrogenated nitrile rubber increases, but otherwise all examples show good results.

As can be seen from Table 1, the cycle characteristics of the electrochemical element are greatly affected by the amount of Ca in the hydrogenated nitrile rubber, with a smaller amount being preferable (comparison between Examples 1 to 6).

As for the prevention of cracking of the electrode active material after cycle testing of the electrochemical element, as can be seen from Table 1, a larger amount of Ca in the hydrogenated nitrile rubber is preferable (comparison between Examples 1 to 6). Also, from Table 1, it can be seen that if a large amount of Pd, which is a hydrogenation catalyst residue, remains in the hydrogenated nitrile rubber, the characteristics rapidly deteriorate (Comparative Example 2).

On the other hand, although not shown in the comparative examples in this specification, excessively high Rh and/or Ru contents, Mg contents, and Na contents cause poor cycle characteristics of electrochemical elements and cracking of the electrode active material after cycle testing. However, Table 1 shows that the contents of these metals in the hydrogenated nitrile rubber of the positive electrode binders A to J of the present invention do not affect any of the viscosity characteristics and stability of the conductive material dispersion, peel strength, output characteristics, cycle characteristics, and the effect of suppressing cracking of the electrode active material after cycle testing.

Also, Table 1 shows that the evaluation of the six characteristics of the electrochemical element and its manufacturing process is greatly affected by the magnitude or slight difference of the hydrogenated nitrile rubber factors, and many of them result in contradictory results, making it difficult to balance these six characteristics. Among them, it can be seen that by using the positive electrode binders A to J of the present invention, these characteristics can be highly balanced. In particular, the positive electrode binders C and D of the present invention achieved an A in all evaluation items, and it is clear that the electrochemical element is optimal when the amount of Ca in the hydrogenated nitrile rubber is within a specific range.

Furthermore, from the main text of the examples and Table 1, it is clear that the new hydrogenated nitrile rubbers A to J used can be manufactured by combining known methods, such as adjusting the [Mw] by adjusting the amount of catalyst in the metathesis reaction, adjusting the [iodine value] by adjusting the amount of hydrogenation catalyst, the polymer molecular weight after the metathesis reaction, and monitoring the hydrogenation rate, adjusting the [Mg, Na] content without using auxiliary materials that cause them during the manufacturing stage such as the emulsion polymerization process and the hydrogenation process, and adjusting the [Ca] used in the coagulant and the [Ru, Rh] used in the hydrogenation catalyst by washing with water and treating with an adsorbent.

### [Industrial Applicability]

The present invention provides a binder for positive electrodes that can improve the viscosity characteristics and stability of conductive material dispersions, as well as increase electrode peel strength and active material crack prevention, thereby improving the cycle characteristics and output characteristics of electrochemical elements.

## Claims

1. A positive electrode binder comprising a hydrogenated nitrile rubber containing a nitrile group-containing monomer unit, a conjugated diene monomer unit and/or an alkylene structural unit, having a weight average molecular weight (Mw) of 1,000 to 1,000,000 and an iodine value in the range of 0.1 to 100 mg/100 mg, containing a phenol-based antiaging agent, and having a palladium (Pd) content of 50 ppm or less and a calcium (Ca) content in the range of 1 to 2000 ppm, dissolved or dispersed in N-methylpyrrolidone (NMP).

2. The positive electrode binder according to claim 1, wherein the palladium (Pd) content in the hydrogenated nitrile rubber is 10 ppm or less.

3. The positive electrode binder according to claim 1, wherein a rhodium (Rh) and/or ruthenium (Ru) content in the hydrogenated nitrile rubber is in the range of 0.5 to 50 ppm.

4. The positive electrode binder according to claim 1, wherein a sodium (Na) content is 300 ppm or less, and a magnesium (Mg) content is 50 ppm or less in the hydrogenated nitrile rubber.

5. The positive electrode binder according to claim 1, wherein the hydrogenated nitrile rubber is obtained by emulsion polymerizing a nitrile group-containing monomer and a conjugated diene monomer, coagulating the resulting polymer with calcium chloride, and hydrogenating the polymer.

6. The positive electrode binder according to claim 1, wherein the hydrogenated nitrile rubber is obtained by emulsion polymerizing a nitrile group-containing monomer and a conjugated diene monomer, adding a phenol-based antiaging agent to the resulting polymer, coagulating the polymer with calcium chloride, and hydrogenating the polymer.

7. The positive electrode binder according to claim 1, wherein the ratio of other repeating units other than the nitrile group-containing monomer units, conjugated diene monomer units and/or alkylene structural units in the hydrogenated nitrile rubber is 0 mass% or more and 5 mass% or less.

8. The positive electrode binder according to claim 1, wherein the content of the phenol-based antiaging agent is in the range of 0.001 to 2 mass%.

9. The positive electrode binder according to claim 1, wherein the solid concentration is in the range of 0.1 to 40 mass%.

10. A method for producing a positive electrode binder, comprising a step of dissolving or dispersing in N-methylpyrrolidone (NMP) a hydrogenated nitrile rubber that contains a nitrile group-containing monomer unit, a conjugated diene monomer unit and/or an alkylene structural unit, has a weight average molecular weight (Mw) of 1,000 to 1,000,000 and an iodine value in the range of 0.1 to 100 mg/100 mg, contains a phenol-based antiaging agent, and has a palladium (Pd) content of 50 ppm or less and a calcium (Ca) content in the range of 1 to 2000 ppm.

11. The method for producing a positive electrode binder according to claim 10, wherein the hydrogenated nitrile rubber is obtained by dividing a hydrogenated nitrile rubber bale.
